# EUROPEAN PATENT SPECIFICATION

(11) **EP 4 630 349 B1**
(45) Date of publication and mention of the grant of the patent: **11.11.2026**
(21) Application number: 23820837.5
(22) Date of filing: 06.12.2023
(51) Int. Cl.: B65G 17/08

(54) **HIGH STIFFNESS BELT**
RIEMEN MIT HOHER STEIFIGKEIT
BANDE À RIGIDITÉ ÉLEVÉE

(30) Priority: 06.12.2022 DK PA202270583
(43) Date of publication of application: 15.10.2025
(73) Proprietor: Ammeraal Beltech Modular A/S, 7100 Vejle (DK)
(72) Inventor: ANDERSEN, Kenneth, Westergaard, 7100 Vejle (DK)
(74) Representative: Patrade A/S
(86) International application number: PCT/EP2023/084513
(87) International publication number: WO 2024/121227

(56) References cited:
- EP-B1- 1 264 785
- CA-A- 936 569
- DE-A1- 3 047 711
- DK-B1- 177 377
- US-B2- 8 985 318

## Description

### Field of the Invention

The present invention is directed to a modular conveyor belt link as well as a conveyor belt assembled from such modular conveyor belt links. One of the particular features with the modular conveyor belt link according to the invention is the fact that there is embedded a reinforcement in the modular belt link providing a number of advantages as will be discussed below.

### Background of the Invention

Conveyor belts assembled from a plurality of modular conveyor belt links are used in a wide variety of different industries, but in some particular applications problems arise. Modular conveyor links as is the case with the present invention, are often injection molded from at polymer material which is a relatively inexpensive method of mass manufacturing large number of substantially identical modular conveyor belt links. These are assembled into a relatively inexpensive conveyor belt with a number of advantages. However, for certain applications such as for example in the auto mobile industry, where very long conveyors are used such that a conveyor belt may be 4-, 5- or 600 meters long with a width of 4-5 meters special challenges arise.

During normal production use, these types of belts are heavily loaded such that the belts may be exposed to stresses up to 80.000 Newton/meter. At these loads the conveyor belt itself is under heavy load and as such the belt is stressed. However, at times when the belt is not stressed, the conveyor belt may be relaxed and as such even small local loads may give rise to a phenomenon called pulsating. Pulsating means that a local load will cause the belt to stretch upstream of the belt, whereas downstream of the belt the forces will lessen. This gives rise to fluctuations in the belt speed and thereby sudden local movement in the belt, and as such may cause inconvenience or even danger to for example personnel crossing the belt or the like.

In order to make the belt stiffer and therefore lessen this phenomenon of pulsating movement, it has been suggested to incorporate fishplates made from steel in order to stiffen the modular conveyor belt.

Typically, modular conveyor belts are assembled from modular conveyor belt links where eye parts are extending from the leading and trailing edge of the belt link.

Lateral apertures are provided in the eye part such that as the eye parts of adjacent belt links are intermeshed, a lateral throughgoing aperture is provided across the conveyor belt. In order to assemble the conveyor belt links into a conveyor belt, connecting pins are inserted through the overlapping apertures, thereby hingely connecting adjacent modular belt links.

By inserting steel fishplates having the same length in the travelling direction of the conveyor belt as the modular conveyer belt modules and provide the fishplates with apertures in positions superposed the lateral apertures in the belt modules it is possible to insert the fishplates in the conveyor belt structure such that the connecting pins will also pass through the apertures in the fishplate. An example of such a construction is disclosed in EP 0916598A1. When the fishplates are overlapping a more or less continuous steel band is established inside the conveyor belt structure. In this manner stresses will be transferred to the steel structure (fish plates) which is much stronger than the polymer structure of the modular conveyor belt links and as such a very stiff conveyor belt is achieved.

There are, however, some drawbacks in these constructions in that the mix of materials puts special requirements on for example sprocket wheels and axels and furthermore the wear and tear of the polymer part of the conveyor belt is different from the wear and tear on the steel parts and as such they tend to wear each other out, thereby diminishing the life expectancy of such a combined conveyor belt. A further problem is the fact that the physical characteristics as to temperature induced expansion and subtraction of the materials is different and as such different parts of the conveyor may move relative to other parts, thereby creating skewness in the conveyor resulting in extra tear and wear. An example of such a construction incorporating steel fishplates is disclosed in EP1932781.

CA936569 discloses an endless belt construction for use in snowmobiles. The endless belt is assembled from modules where each module has a steel reinforcement embedded in the material matrix from which the module is formed or molded.

DK177377, disclosing the preamble of claim 1, discloses a module for use in endless belts where a plurality of like modules are assembled into an endless conveyor belt. Each module comprises a shell and an insert. The shell is provided with a cavity in its underside into which the insert may be fitted. The shell may have one set of properties while the insert may have a different set of properties. Both insert and shell are shaped with eye parts having a lateral aperture therein such that by superposing the eye parts in adjacent belt modules in an off-set manner the apertures in adjacent belt modules will overlap, and the two modules may be assembled by inserting a connection pin.

### Object of the Invention

It is therefore an object of the present invention to provide an improved modular conveyor belt link which does increase the stiffness of the belt link but at the same time addresses some of the problems mentioned above.

### Description of the Invention

Consequently, the invention provides a modular conveyor belt link as defined in claim 1.

With this inventive construction particularly designed for the loads which are substantially smaller than the normal loads to which the conveyor belts are exposed, the high degree of stiffness will be incorporated into the conveyor belt due to the reinforcement structures embedded in the material of the modular conveyor belt links. Particularly, as the reinforcement structure extends into the eye parts, there will be an overlap of the reinforcement structure between adjacent eye parts from adjacent modular belt links as such that the reinforcement structure in the eye parts will cross the connection pin and thereby establish a longitudinal reinforcement system. Furthermore, by being able to embed the reinforcement structure as set out in the inventive embodiment of the invention, it is also possible to lower the entire construction height of the conveyor belt modules which can be a space-saving advantage in the second conveyor belt structures. **In** prior art solutions where steel fishplates are used, they require certain structure heights in order to accommodate a sufficient steel plate material in order to transfer the forces arising in the conveyor belt. However, with the present reinforcement structure being embedded and extending into all eye parts, the load is distributed laterally across the entire belt whereas with prior art devices only a relatively low number of fishplates are built into the contraction, such that each fishplate has a concentrated load which is much higher than the loads to which the eye parts themselves are exposed.

In a further advantageous embodiment, the lateral apertures in the eye parts have a lateral center axis parallel to the load carrying surface, and where the reinforcement structure extends between the load carrying surface and the aperture and below the center axis of the aperture.

In this embodiment, the reinforcement structure extends into the eye part and passes the lateral aperture used for insertion of the connection pin in such a manner that hook like reinforcement structure is created embedded inside the material from which the modular conveyor belt link is manufactured. As an adjacent eye part intermeshed between eye parts of a first link would have same structure, these hook parts will together circumscribe a large part of the periphery of the connection pin and as such a very effective load transfer construction is provided.

In a further advantageous embodiment of the invention, at least the part of the reinforcement structure extending below the center axis of the aperture is provided with an aperture. By providing the aperture in the reinforcement structure it is foreseen that during molding of the modular conveyor belt link, the liquid polymer material from which the modular conveyor belt link is manufactured, will flow through the aperture, and thereby integrate the reinforcement structure completely into the modular conveyor belt link.

In a still further advantageous embodiment of the invention the reinforcement structure is a metal structure, where the metal may be steel, stainless steel, spring steel. Alternatively, the invention in a further advantageous embodiment suggests that the reinforcement is a composite structure manufactured from a fiber reinforced resin, where the fibers may be manufactured from carbon, glass, ceramic, steel or polymer or a mixture of materials. All these materials have in common that they have or may be designed with a very high ten tile strength and at the same time remains a little bit flexible such that they can be integrated into the injection molded thermo plastic body of the modular conveyor belt.

One of the challenges in molding the reinforcement into a thermo plastic material is the fact that for example POM, which is a widely used material for manufacturing these types of modular conveyor belt links, has a tendency to shrink 3-4% whereas the reinforcement materials have a much less ratio of shrinkage. This of course gives rise to certain internal tension problems in the molded modular conveyor belt links, but by designing the reinforcement correctly, it is possible to make the reinforcement lattice work absorb or accommodate this shrinkage without deforming the modular belt link.

In a still further advantageous embodiment of the invention the reinforcement has a material thickness measured perpendicular to the load carrying surface of between 0,3 to 4 mm more preferred 0,5 to 2 mm.

In order to assure a better adherence between the reinforcement and the material from which the modular conveyor belt link is manufactured from, the reinforcement may in a further advantageous embodiment of the invention have a surface treatment with a chemical compound in order to obtain an approved adherence to the material of the modular belt link. Alternatively, the surface of the reinforcement may be given a rough surface where the surface area of the reinforcement is increased such that the interface between the reinforcement and the material from which the modular conveyor belt links are manufactured is greatly increased, thereby making it possible for the reinforcement to transfer forces to and from the material of the modular conveyor belt link.

The invention is also directed to an endless conveyor belt assembled from a plurality of modular conveyor belt links as described above wherein the eye parts of adjacent modular belt links overlap, thereby creating a throughgoing lateral aperture, wherein a connection pin is inserted in order to hingely connecting adjacent modular belt links, whereby the reinforcement structure in adjacent modular belt links overlap in the intended travelling direction of the endless conveyor belt.

In this manner a very strong endless modular conveyor belt may be assembled. As the reinforcement structures overlap, the entire endless conveyor is provided with a reinforcement, particular for tension. Typically, when the endless conveyor is assembled from modular conveyor belt links manufactured from a thermoplastic for example during an injection moulding process, the conveyor belt itself is relatively light as compared to conveyor belts manufactured from steel. However, by incorporating the reinforcement structure into the injection molded belt link, substantial strength is incorporated in the conveyor belt without adding significant weight to the belt itself.

This is further improved in a further advantageous embodiment where the connection pin is made from the same material or a stronger material as the reinforcement structure. Here a preferred material is steel, as it is a proven strong material with respect to tension and relatively cheap and easy to work with. However other more exotic materials such as reinforced plastics may also be used.

### Description of the Drawing

- Figure 1: schematically illustrates a top view of a modular conveyor belt link which may be assembled with a plurality of substantially identical modular belt links in order to construct a conveyor belt.
- Figure 2a: illustrates a cross section through a modular belt link.
- Figure 2b: illustrates a view of one or more laterally arranged modular belt links seen from the front
- Figure 3: illustrates an embodiment where two modular belt conveyor links 1, 1' are intermeshed.
- Figures 4a and 4b: illustrate an example of a reinforcement structure 30 according to the invention.
- Figure 5: illustrates examples of surface structures on the reinforcement structure.

### Detailed Description of the Invention

In general, in the figures the material from which the modular belt links are made is illustrated as transparent in order to be able to view the reinforcement structure. In reality the material of the modular belt links is normally not transparent.

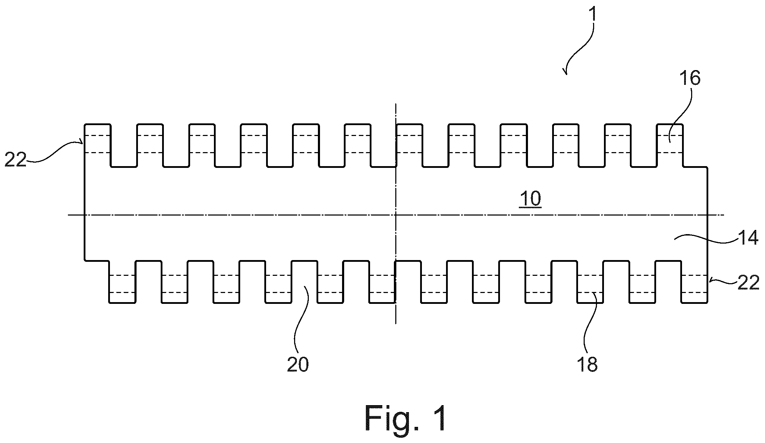

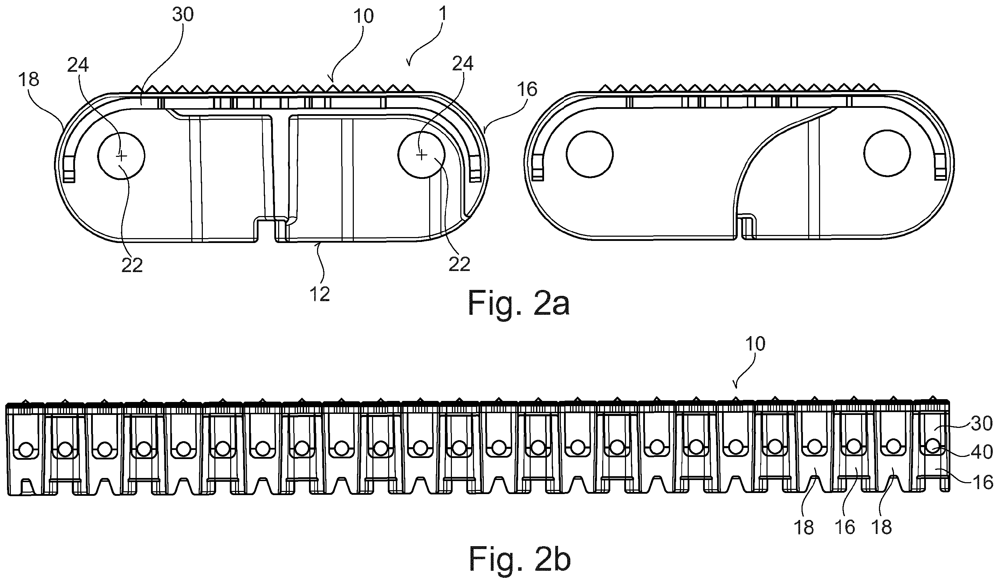

In fig. 1 is schematically illustrated a top view of a modular conveyor belt link which may be assembled with a plurality of substantially identical modular belt links in order to construct a conveyor belt. The modular conveyor belt link 1 has a load carrying surface 10 and an underside 12 (see fig. 2). In between the load carrying surface 10 and the underside 12 a material thickness is present, however for constructive purposes various voids and cavities et cetera may be provided particularly in the underside in order both to save weight but also to allow a sprocket wheel to engage the underside 12 of the modular belt link 1 in order to propel the conveyor belt.

The modular belt link 1 has a main body 14 extending in modular belt link 1's width direction and where a plurality of eye parts 16, 18, extend in a forward direction and rearward direction relative to the main body part 14.

In this connection "forward" and "rearward" shall be construed as the intended travelling direction of the conveyor belt.

The conveyor belt module illustrated in fig. 1 may be travelling in either direction but for the sake of the description, one or the other direction has been chosen a forward and rearward direction. The eye parts 16,18 are spaced in the width direction (laterally) such that adjacent eye parts are separated by an opening 20. Furthermore, as illustrated in fig. 1 eye parts along one edge 16 are off-set relative to eye parts 18 and the opposite edge of the modular belt link 1. In this manner as two identical modular belt links 1 are pushed together, the eye parts 16 on one edge will fit into the openings 20 between the eye parts 18 and the opposite side and as such the modular belt links 1 may be intermeshed with overlapping eye parts.

Furthermore, as indicated in Fig. 2a, apertures 22 are arranged laterally in the eye parts also as indicated in Fig. 1, by the dashed lines in the eye parts. When two adjacent substantially identical modular belt links are intermeshed as described above, the lateral apertures 22 will overlap whereby it is possible to laterally insert a hingepin thereby hingely connecting adjacent modular belt links.

Fig. 2a illustrates a cross section through a modular belt link, for example as described above with reference to Fig. 1, where a reinforcement structure 30 is embedded in the material of the modular conveyor belt link 1, between the load carrying surface 10 and the underside 12. As is evident from Fig. 2a, the reinforcement structure 30 extends into the eye parts 16,18 and in this particular embodiment the reinforcement structure extends above the aperture 22 and further curves with the eye part to below the centre axis 24 of the aperture 22.

In this embodiment the apertures 22 are positioned closer to the load carrying surface than the underside. Furthermore, the apertures as indicated as circular holes 22 but may be overall oblong depending on the use of the conveyor belt module. The dimensions as well as the design of the apertures is not important with respect to the present invention, however the fact that the reinforcement structure 30 extends into the eye parts and in the preferred embodiments also extends downwards below the centre axes 24 of the apertures is important.

In fig. 2b the same or a plurality of like modular belt links are arranged laterally. It may be seen that eye parts 16 along one edge are arranged with a mutual lateral distance, as are eye parts 18 along the other edge. In this manner its possible to interleaf adjacent modular belt links. Furthermore, the reinforcement structure 30 is indicated as being curved into the eye parts 16,18. Also it may be recognised that an aperture 40 is provided near distal ends of the reinforcement structure. This aperture 40 facilitates that the material from which the modular belt link is manufactured, may flow through the aperture, and in this manner provide a fix for the reinforcement structure. When the modular belt link is exposed to tension, this fix will assist in activating the reinforcement structure.

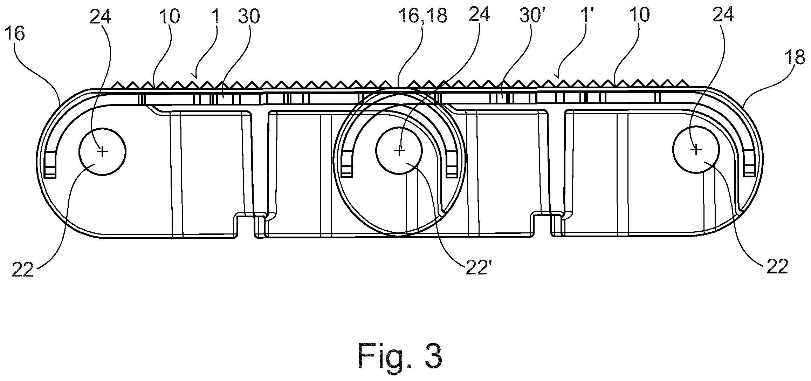

In the Fig. 3 is illustrated an embodiment where two modular belt conveyor links 1, 1' are intermeshed such that the lateral apertures 22' overlap and form a throughgoing aperture 22'. In order to connect the adjacent modular belt links 30, 30' a hingepin (not illustrated) may be inserted in the overlapping throughgoing aperture 22'. Due to the configuration of the reinforcement structure 30, 30', where the reinforcement structure extends into the eye parts 16,18 and below the centre axes 24 of the eye parts (and thereby past the centre of the not illustrated hingepin) horizontal tension in the belt will be transferred to the reinforcement structure 30,30' due to the fact that the reinforcement structure 30,30' extends below the centre axis of the apertures 22.

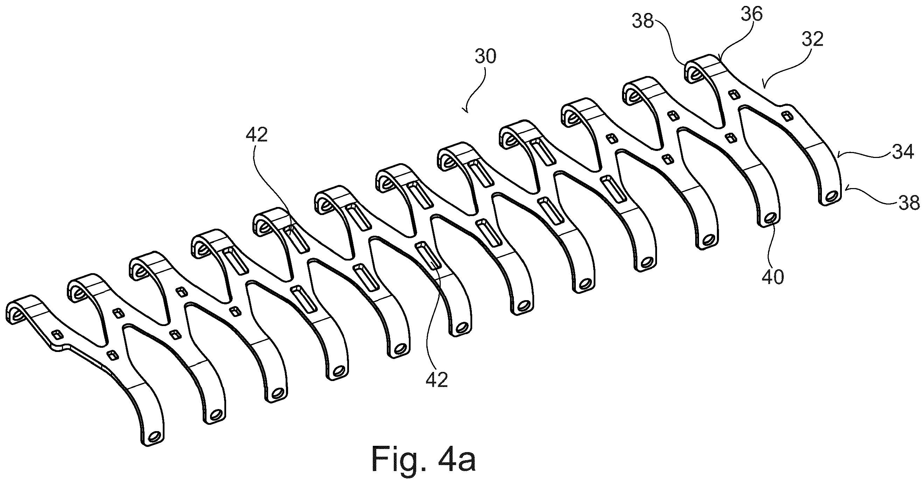

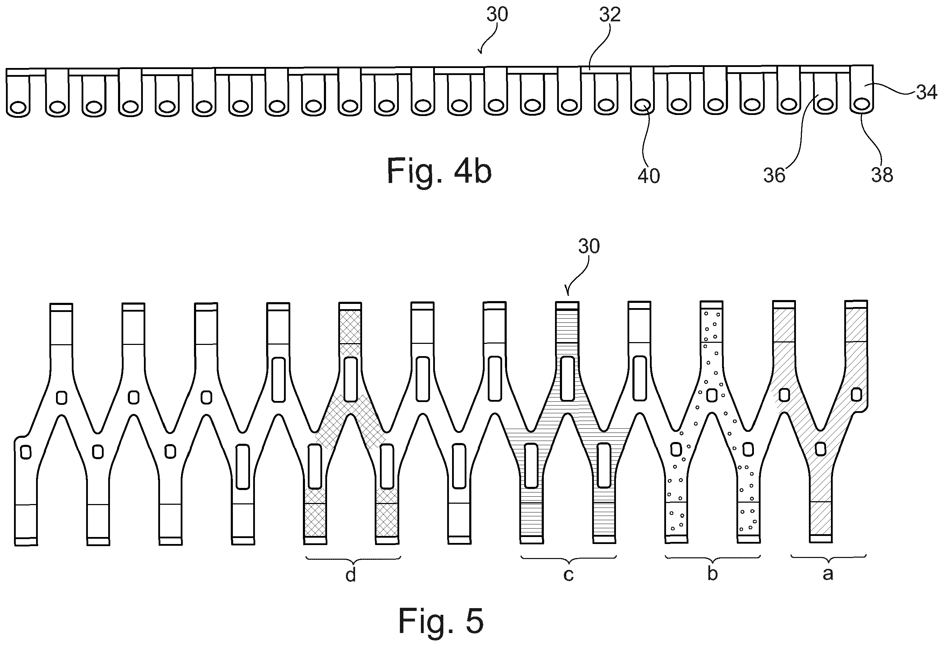

Figure 4a and 4b illustrates an example of a reinforcement structure 30 according to the invention. The reinforcement structure 30 has a central section 32, which central section 32 is embedded in the main body of the modular conveyor belt link. From the central section 32 a number of fingers 34,36 extend in either direction. These fingers 34,36 are embedded in the eye parts as described with reference to Figs. 2 and 3, such that the distance between adjacent fingers 34 and 36 is larger than the distance of the openings 20 in the finished modular belt link. Naturally, the embedded reinforcement structure 30 will be covered by the molding material, preferably a thermoplastic injection molding material and as such also the fingers 34,36 embedded in the eye parts will be covered with the injection molding material.

Near the distal ends 38 of the fingers are in this embodiment provided apertures 40. The apertures 40 are provided in order for the injection molding material to be able to completely surround the reinforcement structure such that the injection molding material of the eye parts will have an intimate contact and stress transferring connection to the fingers 34,36. In this manner they will be able to better transfer the loads through the conveyor belt as described above with reference to Fig. 3.

Further or additional apertures 42 may be provided in the reinforcement structure in order to allow the material from which the modular belt link is manufactured to create a better and more solid contact with the reinforcement structure. When the reinforcement structure is in the shape of a mesh a very good contact and integration is facilitated. However, in some production situations, particularly during injection moulding processes it may be challenging to arrange the mesh correctly in the mould.

In some embodiments it may be advantageous to provide a surface treatment to the reinforcement structure in order to improve the connection between the injection molding material and the reinforcement structure. For this purpose, various surface treatments may be applied.

In Fig. 5 examples of such surface structures are illustrated. It shall be understood that in Fig. 5 at least four different types of surface treatment are illustrated and that it is not the intention that a modular belt link should be provided with all four of five treatments, but the treatments are only meant as examples of treatments which could be applied to the reinforcement structure. In the reinforcement structure a zone a is indicated where the surface is roughened, for example by being grinded with very coarse sandpaper or the like in order to increase the roughness of the surface and at the same time increase the surface area.

In the reinforcement structure 30 area b, the surface of the reinforcement structure 30 is provided with dimples or small shallow indentations in order to also improve the adherence to the injection molding material in which the reinforcement structure 30 will be embedded.

In the zone C, ridges and/or grooves are provided perpendicular to the intended travelling direction such that the ridges and/or grooves will create a solid bond with the injection molding material in order to transfer any stress forces/tensile forces down the conveyor belt.

Finally, in Zone D a chemical etching is illustrated on the surface of the reinforcement structure 30. Like the other examples mentioned above, chemical etching will improve the coarseness of the surface of the reinforcement structure 30 and may at the same time improve the affinity of a bond between the injection molding material from which the conveyor belt module is manufactured and the material of the reinforcement structure 30.

In this connection it is contemplated, as already discussed above, that the reinforcement structure may be manufactured from any suitable material, but as preferred materials, particularly steel, spring steel, tin metal, various composites such as for example a carbon fibre reinforced resins or ceramic fibre reinforces resins shall be contemplated within the scope of the present invention. Furthermore, the reinforcement structure may be a homogeneous structure as illustrated in fig. 4a, but it may also be a mesh, or it may be knitted for example from stainless steel thread. Likewise, it may be (loosely) woven or non-woven in such a manner allowing the material of the modular belt link to integrate the reinforcement structure into the body of the modular belt link.

## Claims

1. Modular conveyor belt link (1), of the type used in endless conveyor belts assembled from a plurality of such modular conveyor belt links (1), where said endless conveyor belt has a load carrying surface and an underside opposite said load carrying surface, where the modular conveyor belt link (1) has a load carrying surface (10) and an underside (12) opposite said load carrying surface (10) and further has a main body (14) extending in the modular belt link's width direction, and where a plurality of eye parts (16,18) extend forwards and rearwards from said main body (14), said eye parts (16,18) being spaced in the width direction of the modular belt link providing an opening (20) between adjacent eye parts (16,18), where forwards extending eye parts (16) are offset relative to rearwards extending eye parts (18), such that when two modular conveyor belt links are pushed together the eye parts (16,18) on one link will inter-fit between eye parts on the other modular belt link, and where an aperture (22) is arranged laterally in each eye part (16,18), such that when eye parts (16,18) of two adjacent modular conveyor belt links are inter-fitted the apertures (22) will overlap forming a throughgoing aperture from one side of the conveyor belt to the opposite side, wherein a reinforcement structure (30) is embedded in the material of the modular conveyor belt link (1) between the load carrying surface (10) and underside (12), and where the reinforcement structure (30) has a central section (32), and where from the central section (32) of the reinforcement structure (30) a number of fingers (34,36) extend in either direction such that these fingers (34,36) are embedded in the eye parts (16,18), such that the distance between adjacent fingers (34) and (36) is larger than the distance of the openings (20) in the finished modular belt link (1), where said reinforcement structure (30) extends into the eye parts (16,18) where the reinforcement structure (30) is made from a material different from the material of the modular belt link (1) and wherein the lateral apertures (22) in the eye parts (16,18) have a lateral center axis (24) parallel to the load carrying surface (10) , and where the reinforcement structure (30) in the eye parts (16,18) extend below the center axis (24) of the aperture (22) and **characterized in that** at least the part of the reinforcement structure (30) extending below the center axis (24) of the aperture (22) is provided with an aperture (40) oriented along an axis different from the lateral center axis (24) of the apertures (22) in the eye parts (16,18).

2. Modular conveyor belt link according to claim 1 wherein the modular belt link is injection molded from a thermoplastic material.

3. Modular conveyor belt link according to any of claims 1 or 2 wherein the reinforcement structure (30) is a metal structure, where the metal may be steel, stainless steel, spring steel

4. Modular conveyor belt link according to any of claims 1 or 2 wherein the reinforcement structure (30) is a composite structure manufactured from a fiber reinforced resin, where the fibers may be manufactured from carbon, glass, ceramic, steel or polymer or a mixture of materials.

5. Modular conveyor belt link according to any of claims 3 or 4 wherein the reinforcement structure (30) has a material thickness measured perpendicular to the load carrying surface of between 0,3 to 4 mm more preferred 0,5 to 2 mm

6. Modular conveyor belt link according to any of claims 1 to 5 wherein the reinforcement structure (30) is surface treated with a chemical compound in order to obtain an improved adherence to the material of the modular belt link.

7. Modular conveyor belt link according to any of claims 1 to 5 wherein the reinforcement structure (30) is provided with apertures, or is a mesh, or is a knitted, woven or non-woven structure.

8. Endless conveyor belt assembled from a plurality of modular conveyor belt links according to any of claims 1 to 7, wherein the eye parts of adjacent modular belt links overlap, thereby creating a throughgoing lateral aperture, wherein a connection pin is inserted in order to hingely connecting adjacent modular belt links, whereby the reinforcement structure in adjacent modular belt links overlap in the intended travelling direction of the endless conveyor belt.

9. Endless conveyor belt according to claim 8 wherein the connection pin is made from the same material or a stronger material as the reinforcement structure.

## Patentansprüche

1. Glied (1) für ein modulares Förderband der Art, die in Endlosförderbändern verwendet wird, die aus einer Vielzahl von solchen Gliedern (1) für ein modulares Förderband zusammengesetzt sind, wobei das Endlosförderband eine lasttragende Oberfläche und eine Unterseite gegenüber der lasttragenden Oberfläche aufweist, wobei das Glied (1) für ein modulares Förderband eine lasttragende Oberfläche (10) und eine Unterseite (12) gegenüber der lasttragenden Oberfläche (10) aufweist und ferner einen Hauptkörper (14) aufweist, der sich in der Breitenrichtung des Glieds für ein modulares Band erstreckt, und wobei sich eine Vielzahl von Ösenteilen (16,18) von dem Hauptkörper (14) nach vorne und nach hinten erstrecken, wobei die Ösenteile (16,18) in der Breitenrichtung des Glieds für ein modulares Band beabstandet sind, wobei eine Öffnung (20) zwischen angrenzenden Ösenteilen (16,18) bereitgestellt wird, wobei sich nach vorne erstreckende Ösenteile (16) relativ zu sich nach hinten erstreckenden Ösenteilen (18) derart versetzt sind, dass die Ösenteile (16,18), wenn zwei Glieder für ein modulares Förderband zusammengeschoben werden, an einem Glied zwischen Ösenteile an dem anderen Glied für ein modulares Band passen, und wobei eine Apertur (22) seitlich in jedem Ösenteil (16,18) derart angeordnet ist, dass die Aperturen (22), wenn die Ösenteile (16,18) von zwei angrenzenden Gliedern für ein modulares Förderbändern zusammenpassen, eine durchgehende Apertur von einer Seite des Förderbands zu der gegenüberliegenden Seite überlappen, wobei
eine Verstärkungsstruktur (30) in das Material des Glieds (1) für ein modulares Förderband zwischen der lasttragenden Oberfläche (10) und der Unterseite (12) eingebettet ist, und wobei die Verstärkungsstruktur (30) einen Mittelabschnitt (32) aufweist, und wobei sich von dem Mittelabschnitt (32) der Verstärkungsstruktur (30) eine Anzahl von Fingern (34,36) in beide Richtungen derart erstrecken, dass diese Finger (34,36) in die Ösenteile (16,18) derart eingebettet sind, dass der Abstand zwischen den angrenzenden Fingern (34) und (36) größer als der Abstand der Öffnungen (20) in dem fertigen Glied (1) für ein modulares Band ist, wobei die Verstärkungsstruktur (30) sich in die Ösenteile (16,18) hinein erstreckt, wobei die Verstärkungsstruktur (30) aus einem Material hergestellt ist, das sich von dem Material des Glieds (1) für ein modulares Band unterscheidet, und wobei die seitlichen Aperturen (22) in den Ösenteilen (16,18) eine seitliche Mittelachse (24) aufweisen, die parallel zu der lasttragenden Oberfläche (10) ist, und wobei die Verstärkungsstruktur (30) in den Ösenteilen (16,18) sich unterhalb der Mittelachse (24) der Apertur (22) erstreckt und **dadurch gekennzeichnet, dass** mindestens der Teil der Verstärkungsstruktur (30) sich unterhalb der Mittelachse (24) der Apertur (22) erstreckt, mit einer Apertur (40) bereitgestellt ist, die entlang einer Achse ausgerichtet ist, die sich von der seitlichen Mittelachse (24) der Aperturen (22) in den Ösenteilen (16,18) unterscheidet.

2. Glied für ein modulares Förderband nach Anspruch 1, wobei das Glied für ein modulares Band aus einem thermoplastischen Material spritzgegossen ist.

3. Glied für ein modulares Förderband nach einem der Ansprüche 1 oder 2, wobei die Verstärkungsstruktur (30) eine Metallstruktur ist, wobei das Metall Stahl, Edelstahl oder Federstahl sein kann.

4. Glied für ein modulares Förderband nach einem der Ansprüche 1 oder 2, wobei die Verstärkungsstruktur (30) eine aus einem faserverstärkten Harz gefertigte Verbundstruktur ist, wobei die Fasern aus Kohlenstoff, Glas, Keramik, Stahl oder Polymer oder einer Mischung von Materialien gefertigt sein können.

5. Glied für ein modulares Förderband nach einem der Ansprüche 3 oder 4, wobei die Verstärkungsstruktur (30) eine senkrecht zu der lasttragenden Oberfläche gemessene Materialdicke von zwischen 0,3 bis 4 mm, vorzugsweise 0,5 bis 2 mm, aufweist.

6. Glied für ein modulares Förderband nach einem der Ansprüche 1 bis 5, wobei die Verstärkungsstruktur (30) mit einer chemischen Verbindung oberflächenbehandelt ist, um eine verbesserte Haftung an dem Material des Glieds für ein modulares Band zu erzielen.

7. Glied für ein modulares Förderband nach einem der Ansprüche 1 bis 5, wobei die Verstärkungsstruktur (30) mit Aperturen bereitgestellt ist oder ein Netz ist oder eine gestrickte, gewebte oder nicht gewebte Struktur ist.

8. Endlosförderband, zusammengesetzt aus einer Vielzahl von Gliedern für ein modulares Förderband nach einem der Ansprüche 1 bis 7, wobei die Ösenteile von angrenzenden Gliedern für ein modulares Band überlappen und dadurch eine durchgehende seitliche Apertur bilden, wobei ein Verbindungsstift eingesetzt ist, um angrenzende Glieder für ein modulares Band gelenkig zu verbinden, wobei sich die Verstärkungsstruktur in angrenzenden Gliedern für ein modulare Band in der vorgesehenen Förderrichtung des Endlosförderbandes überlappt.

9. Endlosförderband nach Anspruch 8, wobei der Verbindungsstift aus dem gleichen Material oder einem stärkeren Material als die Verstärkungsstruktur hergestellt ist.

## Revendications

1. Maillon de bande transporteuse modulaire (1), du type utilisé dans des bandes transporteuses sans fin assemblées à partir d'une pluralité de tels maillons de bande transporteuse modulaire (1), ladite bande transporteuse sans fin présentant une surface porteuse de charge et une face inférieure opposée à ladite surface porteuse de charge, le maillon de bande transporteuse modulaire (1) comportant une surface porteuse de charge (10) et comportant en outre un corps principal (14) s'étendant dans le sens de la largeur du maillon de bande modulaire, et une pluralité de parties d'œillet (16, 18) s'étendant vers l'avant et vers l'arrière à partir dudit corps principal (14), lesdites parties d'œillet (16, 18) étant espacées dans le sens de la largeur du maillon de bande modulaire prévoyant une ouverture (20) entre les parties d'œillet (16, 18) adjacents, les parties d'œillet s'étendant vers l'avant (16) sont décalées par rapport aux parties d'œillet s'étendant vers l'arrière (18), de sorte que lorsque deux maillons de bande transporteuse modulaire sont mis en contact, les parties d'œillet (16, 18) sur un maillon s'intercalent entre les parties d'œillet de l'autre maillon de bande modulaire, et une ouverture (22) étant agencée latéralement dans chaque partie d'œillet (16, 18), de telle sorte que lorsque les parties d'œillet (16, 18) de deux maillons de bande transporteuse modulaire adjacents sont intercalées, les ouvertures (22) se chevauchent en formant un ouverture traversante à partir d'un côté de la bande transporteuse jusqu'au côté opposé, dans lequel une structure de renforcement (30) est intégrée au matériau du maillon modulaire de la bande transporteuse (1), entre la surface porteuse de charge (10) et la face inférieure (12), et la structure de renforcement présentant une section centrale (32), et à partir de la section centrale (32) de la structure de renforcement (30), un certain nombre de languettes (34, 36) s'étendant dans les deux sens de telle sorte que ces languettes (34, 36) sont intégrées dans les parties d'œillet (16, 18), de telle sorte que la distance entre les languettes (34) et (36) est supérieure à la distance des ouvertures (20) dans la bande transporteuse modulaire (1) terminée, ladite structure de renforcement (30) s'étendant dans les parties d'œillets (16, 18), la structure de renforcement étant constituée d'un matériau différent de celui du maillon de bande modulaire (1) et dans lequel les ouvertures latérales (22) dans les parties d'œillet (16, 18) ont un axe central latéral (24) parallèle à la surface porteuse de charge (10), la structure de renforcement (30) dans les parties d'œillet (16,18) s'étendant sous l'axe central (24) de l'ouverture (22) et **caractérisé en ce qu'**au moins la partie de la structure de renforcement (30) s'étendant sous l'axe central (24) de l'ouverture (22) est pourvue d'une ouverture (40) orientée le long d'un axe différent de l'axe central latéral (24) des ouvertures (22) dans les parties d'œillet (16,18).

2. Maillon de bande transporteuse modulaire selon la revendication 1, dans lequel le maillon de bande modulaire est moulé par injection à partir d'un matériau thermoplastique.

3. Maillon de bande transporteuse modulaire selon l'une quelconque des revendications 1 ou 2, dans lequel la structure de renforcement (30) est une structure métallique, le métal pouvant être de l'acier, de l'acier inoxydable ou de l'acier à ressort.

4. Maillon de bande transporteuse modulaire selon l'une quelconque des revendications 1 ou 2, dans lequel la structure de renforcement (30) est une structure composite fabriquée à partir d'une résine renforcée de fibres, les fibres pouvant être fabriquées à partir de carbone, de verre, de céramique, d'acier ou de polymère ou d'un mélange de matériaux.

5. Maillon de bande transporteuse modulaire selon l'une quelconque des revendications 3 ou 4, dans lequel la structure de renforcement (30) présente une épaisseur de matériau mesurée perpendiculairement à la surface porteuse de charge comprise entre 0,3 et 4 mm, de préférence entre 0,5 et 2 mm.

6. Maillon de bande transporteuse modulaire selon l'une quelconque des revendications 1 à 5, dans lequel la structure de renforcement (30) est traitée en surface avec un composé chimique afin d'obtenir une meilleure adhérence au matériau du maillon de bande modulaire.

7. Maillon de bande transporteuse modulaire selon l'une quelconque des revendications 1 à 5 dans lequel la structure de renforcement (30) est pourvue d'ouvertures, ou est un maillage, ou est une structure tricotée, tissée ou non tissée.

8. Bande transporteuse sans fin assemblée à partir d'une pluralité de maillons de bande transporteuse modulaire selon l'une quelconque des revendications 1 à 7, dans laquelle les parties d'œillet de maillons de bande modulaire adjacents se chevauchent, créant ainsi une ouverture latérale traversante, dans laquelle une goupille de liaison est insérée afin de relier de manière articulée les maillons de bande modulaire adjacents, moyennant quoi la structure de renforcement de maillons de bande modulaire adjacents se chevauche dans le sens de déplacement prévue de la bande transporteuse sans fin.

9. Bande transporteuse sans fin selon la revendication 8, dans laquelle la goupille de liaison est constituée du même matériau ou d'un matériau plus résistant que la structure de renforcement.
